# FASCICULE DE BREVET EUROPEEN

(11) **EP 0 859 781 B1**
(45) Date de publication et mention de la délivrance du brevet: **02.05.2002**
(21) Numéro de dépôt: 97930551.3
(22) Date de dépôt: 18.06.1997
(51) Int. Cl.: C07F 1/00, C01D 15/00

(54) **SOLVATE D'HEXAFLUROPHOSPHATE DE LITHIUM ET DE PYRIDINE, SA PREPARATION ET PROCEDE DE PREPARATION D'HEXAFLUOROPHOSPHATE DE LITHIUM UTILISANT CE SOLVATE**
LITHIUMHEXAFLUOROPHOSPHAT-PYRIDINSOLVATE, DEREN HERSTELLUNG, UND VERFAHREN ZUR HERSTELLUNG VON LITHIUMHEXAFLUOROPHOSPHATE UNTER VERWENDUNG DIESER SOLVATE
LITHIUM AND PYRIDINE HEXAFLUOROPHOSPHATE SOLVATE, ITS PREPARATION AND METHOD FOR PREPARING LITHIUM HEXAFLUOROPHOSPHATE USING THIS SOLVATE

(30) Priorité: 19.06.1996 FR 9607623
(43) Date de publication de la demande: 26.08.1998
(73) Titulaire: CENTRE NATIONAL D'ETUDES SPATIALES, F-75039 Paris Cedex 01 (FR)
(72) Inventeur: WILLMANN, Patrick, F-31450 Montgiscard (FR); NAEJUS, Régine, F-37000 Tours (FR); COUDERT, Robert, F-37390 Notre Dame D'Oe (FR); LEMORDANT, Daniel, F-91400 Orsay (FR)
(74) Mandataire: Des Termes, Monique
(86) Numéro de dépôt international: FR9701097
(87) Numéro de publication internationale: WO9748709

(56) Documents cités:
- DE-A- 2 026 110
- CHEMICAL ABSTRACTS, vol. 100, no. 21, 21 mai 1984 Columbus, Ohio, US; abstract no. 174608c, MOHAMED, K. ET AL.: "pyridinium poly(hydrogen fluoride) - a reagent for the preparation of hexafluorophosphates" XP002024671 & J. FLUORINE CHEM., vol. 23, no. 6, 1983, pages 509-514, cité dans la demande

## Description

### Domaine technique

L'invention a pour objet un nouveau composé constitué par un solvate d'hexafluororophosphate de lithium et de pyridine, utilisable pour préparer de l'hexafluorophosphate de lithium.

Elle s'applique en particulier à la préparation d'hexafluorophosphate de lithium utilisé comme électrolyte dans les accumulateurs lithium-carbone.

Les accumulateurs au lithium connaissent à l'heure actuelle un important développement pour diverses applications, notamment dans les véhicules électriques, les équipements portables tels que les téléphones portatifs et les caméscopes, et dans l'espace. Ces accumulateurs utilisent un électrolyte constitué d'un ou plusieurs solvants organiques contenant en solution un sel de lithium. Parmi les sels de lithium utilisables, l'hexafluorophosphate de lithium (LiPF₆) est à l'heure actuelle le plus employé en raison de sa solubilité élevée dans les solvants organiques, de sa conductivité et de sa sécurité.

### Etat de la technique antérieure

La méthode classique pour préparer LiPF₆ consiste à faire réagir PF₅ avec LiF dans de l'acide fluorhydrique anhydre, mais la pureté du LiPF₆ préparé de cette façon n'est que de 90 à 95 %, alors que des puretés d'au moins 99 % sont requises pour une utilisation dans un accumulateur au lithium afin de satisfaire les exigences de stabilité et de solubilité du LiPF₆ au stockage.

Pour surmonter cet inconvénient on peut toutefois obtenir du LiPF₆ de pureté supérieure par le procédé décrit dans US-A-3 654 330.

Selon ce procédé, on fait réagir du fluorure de lithium, de l'acide fluorhydrique anhydre et du pentafluorure de phosphore PF₅ pour obtenir LiPF₆ impur que l'on purifie ensuite par réaction avec de l'acétonitrile. On produit ainsi de l'hexafluorophosphate de tétraacétonitrilolithium Li(CH₃CN)₄ PF₆ qui régénère ensuite l'hexafluorophosphate de lithium par chauffage sous vide partiel. On peut aussi produire directement Li(CH₃CN)₄PF₆ en faisant réagir PF₅ dans une suspension de LiF dans l'acétonitrile.

Ce procédé permet d'obtenir de l'hexafluorophosphate de lithium de grande pureté, mais il a l'inconvénient de nécessiter l'emploi de PF₅ qui est un produit très onéreux.

Une autre voie d'obtention des hexafluorophosphates de métaux alcalins a été explorée par Syed Mohamed et Coll dans J. Fluorine Chem., 23, 1983, pages 509-514. Selon ce document, on part d'hexafluorophosphate de pyridinium C₅H₅NHPF₆ que l'on traite ensuite avec un hydroxyde de métal alcalin ou d'ammonium en milieu aqueux, mais ce procédé n'a pas permis d'isoler LiPF₆ solide de ce milieu. Par ailleurs, la préparation du produit de départ C₅H₅NHPF₆ fait intervenir une réaction à basse température (- 80°C) entre la pyridine et de l'acide fluorhydrique anhydre, puis la réaction du produit obtenu avec du chlorure de phosphoryle. Il s'agit d'une mise en oeuvre délicate faisant intervenir des réactifs coûteux (POCL₃), difficile à mettre en oeuvre à l'échelle industrielle.

Lange et Coll dans BER. 63B, 1058-70 (1930) ont décrit la préparation de C₅H₅NHPF₆ par réaction de pyridine dans l'acide acétique avec de l'hexafluorophosphate d'ammonium. Mais ils n'ont pas envisagé d'utiliser cet hexafluorophosphate de pyridinium pour préparer de l'hexafluorophosphate de lithium.

Ainsi, aucun des procédés connus actuellement ne permet de préparer de l'hexafluorophosphate de lithium LiPF₆ de haute pureté dans des conditions faciles à mettre en oeuvre, sans utiliser de réactifs onéreux.

### Exposé de l'invention.

La présente invention a précisément pour objet la fabrication de LiPF₆ de haute pureté par un procédé simple et peu onéreux à partir de produits commerciaux bon marché, utilisant comme produit intermédiaire un solvate d'hexafluorophosphate de lithium et de pyridine. Elle concerne également le solvate et son procédé de préparation.

Le solvate répond à la formule :

Li(C₅H₅N)PF₆

et il présente l'avantage d'être beaucoup plus facile à manipuler que LiPF₆ car il est stable à l'air à température ambiante alors que LiPF₆ se décompose en PF₅ et LiF, et doit être manipulé en boîte à gants. De plus, il permet de générer du LiPF₆ ayant un degré de pureté élevé de 99,8 %, par des procédés simples.

Selon l'invention, ce solvate peut être préparé par un procédé comprenant les étapes suivantes :
a) Préparation d'hexafluorophosphate de pyridinium de formule C₅H₅NHPF₆ par neutralisation de l'acide hexafluorophosphorique HPF₆ avec de la pyridine en utilisant la quantité stoechiométrique permettant de neutraliser uniquement HPF₆ et non les autres impuretés acides présentes dans l'acide de départ, et
b) Conversion de l'hexafluorophosphate de pyridinium en solvate LiPF₆, C₅H₅N par échange avec un composé de lithium choisi parmi la lithine, les alcoolates de lithium et les alkyl-lithium.

Dans ce procédé, la première étape a) est facile à mettre en oeuvre car elle peut être effectuée en milieu aqueux à la température ambiante à partir d'un produit commercial peu coûteux (HPF₆ en solution aqueuse). Par ailleurs, en utilisant la quantité stoechiométrique exacte qui correspond à la neutralisation de l'acide HPF₆ à l'exclusion des autres impuretés acides présentes dans le produit de départ, on peut obtenir de l'hexafluorophosphate de pyridinium de haute pureté qui conduira ensuite à un solvate Li(C₅H₅N)PF₆ de haute pureté.

Cette quantité stoechiométrique peut être déterminée facilement en effectuant préalablement un essai de neutralisation sur l'acide commercial HPF₆ utilisé comme produit de départ et en suivant la neutralisation par conductimétrie.

En effet, on a découvert que l'acide HPF₆ est plus fort que les autres acides présents comme impuretés dans les solutions commerciales et qu'il est neutralisé le premier en donnant lieu à une baisse rapide de conductivité de la solution. La fin de cette baisse correspond à la neutralisation complète de HPF₆ et on peut ainsi déterminer la quantité stoechiométrique de base nécessaire pour cette neutralisation.

Ce mode de préparation de C₅H₅NHPF₆ est beaucoup plus facile à mettre en oeuvre que celui décrit par Syed Mohamed dans J. Fluorine Chem., 23, 1983, pages 509-514, où l'on obtient cet hexafluorophosphate de pyridinium par une réaction en deux étapes en préparant tout d'abord un réactif poly(fluorure d'hydrogène)-pyridinium à une température de -80°C, suivi de la réaction de ce réactif avec du chlorure de phosphoryle ajouté goutte à goutte.

La première étape du procédé de l'invention est plus simple à mettre en oeuvre puisqu'elle est effectuée en solution aqueuse, à la température ambiante ; de plus, elle fait appel à des réactifs peu onéreux, disponibles dans le commerce tels que les solutions de HPF₆ dans l'eau.

Dans la seconde étape b) du procédé de l'invention, on convertit l'hexafluorophosphate de pyridinium en le solvate Li(C₅H₅N)PF₆ par échange avec un composé de lithium. Ce solvate possède le grand avantage d'être, contrairement à LiPF₆, stable à la température ambiante, ce qui permet une manipulation et un stockage aisés.

Selon un premier mode de réalisation de cette étape, on utilise comme composé de lithium la lithine, hydratée ou non, en milieu alcool, par exemple le méthanol ou l'éthanol. Cette réaction est rapide et on obtient le solvate en solution dans l'alcool. On peut ensuite l'obtenir sous forme solide par évaporation de l'alcool.

Selon un second mode de réalisation de l'étape b) de conversion, on utilise comme composé de lithium un alcoolate de lithium, par exemple le méthanolate ou l'éthanolate de lithium, et on réalise la réaction d'échange dans l'alcool correspondant à l'alcoolate de lithium.

Dans ce cas, on peut préparer directement l'alcoolate en milieu alcool par dissolution de lithium dans un excès d'alcool.

On peut aussi effectuer cette réaction dans un milieu aprotique, par exemple dans du tétrahydrofuranne, d'autres éthers ou de l'acétonitrile. On obtient ensuite le solvate comme précédemment par évaporation du milieu réactionnel constitué par l'alcool ou le solvant aprotique.

Selon un troisième mode de réalisation de l'étape b), on utilise comme composé de lithium un alkyl-lithium et on effectue la réaction d'échange dans un hydrocarbure aliphatique saturé tel que l'hexane ou le pentane. Les alkyl-lithium susceptibles d'être utilisés sont le n-butyl lithium et le tert-butyl lithium. Dans ce cas, le solvate précipite dans le milieu réactionnel et peut être récupéré par filtration.

L'invention a également pour objet un procédé de préparation d'hexafluorophosphate de lithium, à partir du solvate d'hexafluorophosphate de lithium et de pyridine de formule :

Li(C₅H₅N)PF₆

Selon ce procédé, on soumet ce solvate à une décomposition sous vide à une température inférieure ou égale à 50°C pour éliminer la pyridine par volatilisation.

Cette décomposition peut être effectuée sous vide dynamique, sous une pression inférieure à 1Pa, à une température inférieure ou égale à 50°C, pour éviter la décomposition de LiPF₆.

Selon une variante de mise en oeuvre de ce procédé, on fait réagir le solvate avec de l'acide sulfurique concentré pour éliminer la pyridine par précipitation sous forme de sulfate de pyridinium.

Pour effectuer cette réaction, on dissout le solvate dans un solvant aprotique dans lequel le sulfate de pyridinium est insoluble alors que LiPF₆ y est soluble. Cependant, il faut éviter l'addition d'un excès de H₂SO₄ pour éviter une coprécipitation de sulfate de lithium. Le solvant aprotique peut être le tétrahydrofuranne.

Le solvate utilisé comme produit de départ est avantageusement préparé par les procédés décrits ci-dessus.

Ce mode de préparation de l'hexafluorophosphate de lithium est particulièrement intéressant car le produit de départ, le solvate de Li(C₅H₅N)PF₆ peut être préparé avec un degré de pureté élevé. On obtient donc à partir de ce solvate de l'hexafluorophosphate de lithium de pureté très élevée par des procédés faciles à mettre en oeuvre. De plus, la préparation du solvate par les procédés décrits ci-dessus est facile à réaliser et peu onéreuse. On peut donc obtenir de cette façon du LiPF₆ de pureté élevée à un coût moindre de celui du LiPF₆ actuel.

Enfin, étant donné que le solvate est stable à la température ambiante, on facilite les problèmes de stockage et de manutention de LiPF₆, car ce dernier peut être régénéré à partir du solvate uniquement lorsque cela est nécessaire pour préparer l'électrolyte à base de LiPF₆.

D'autres caractéristiques et avantages de l'invention apparaîtront mieux à la lecture de la description qui suit, donnée bien entendu à titre illustratif et non limitatif, en référence aux dessins annexés.

### Brève description des dessins

La figure 1 est un diagramme illustrant la courbe de dosage conductimétrique de l'acide hexafluorophosphorique commercial par de la lithine.

La figure 2 représente le spectre infrarouge de l'hexafluorophosphate de pyridinium.

La figure 3 représente le spectre Raman de l'hexafluorophosphate de pyridinium.

La figure 4 illustre le spectre RMN du proton de l'hexafluorophosphate de pyridinium.

La figure 5 représente le spectre RMN du proton du solvate Li(C₅H₅N)PF₆.

La figure 6 représente le spectre infrarouge de l'hexafluorophosphate de lithium obtenu par le procédé de l'invention.

La figure 7 représente à titre comparatif le spectre infrarouge de l'hexafluorophosphate du commerce.

### Exposé détaillé des modes de réalisation.

Les exemples qui suivent illustrent la préparation d'hexafluorophosphate de lithium par les procédés de l'invention.

### Exemple 1 : Préparation de l'hexafluorophosphate de pyridinium. (C₅H₅ NHPF₆)

Dans cet exemple, on part d'une solution aqueuse commerciale d'acide hexafluorophosphorique HPF₆, qui est un mélange de l'acide fort HPF₆ et d'acides faibles.

En premier lieu, on détermine la quantité stoechiométrique nécessaire pour convertir uniquement l'acide fort HPF₆ de cette solution commerciale en hexafluorophosphate de pyridinium. Ceci est effectué en neutralisant cette solution qui contient 0,196 g de HPF₆ pour 20 cm³ d'eau, par de la lithine 0,98 N et en suivant la neutralisation par conductimétrie.

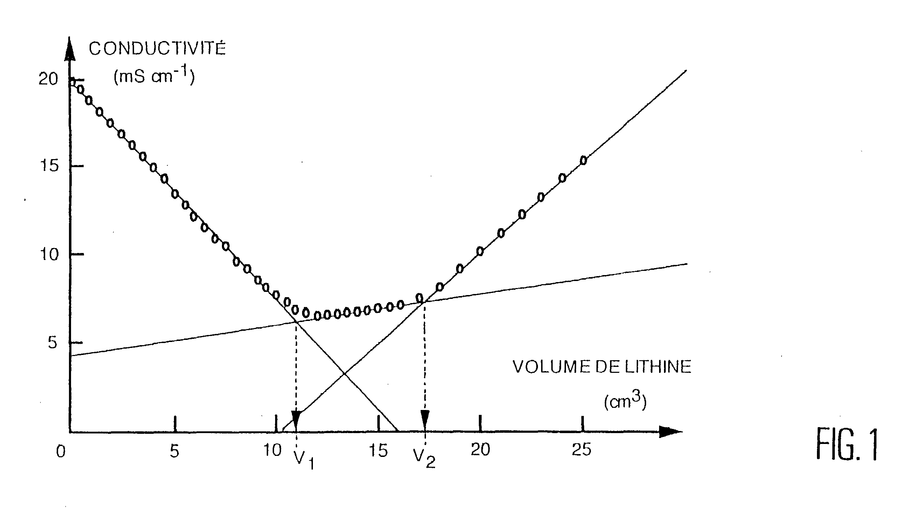

La figure 1 représente la courbe obtenue dans ces conditions, soit l'évolution de la conductivité (en mS. cm⁻¹) de la solution en fonction du volume de lithine ajouté (en cm³).

Sur cette figure, on remarque que le premier tronçon de la courbe de conductimétrie est linéaire et correspond jusqu'au volume V₁ à la neutralisation de l'acide HPF₆. A partir de V₁ et jusqu'au volume V₂, l'adjonction de lithine ne modifie pas la conductivité de la solution ; ceci correspond à la neutralisation des impurétés acides plus faibles. Au-delà de V₂, la conductivité de la solution augmente linéairement car la neutralisation des acides est terminée.

On détermine ainsi la quantité de base correspondant au volume V₁ qui permet de neutraliser uniquement l'acide fort HPF₆. Cette quantité correspond à 10,5 cm³ de lithine 0,098 N pour 20 cm³ de solution aqueuse commercial contenant 0,196 g de HPF₆. A partir de ces résultats, on prépare l'hexafluorophosphate de pyridinium en utilisant le même lot d'acide hexafluorophosphorique commercial et en opérant de la façon suivante.

A 20 g de la solution commerciale aqueuse de HPF₆ (produit Fluka ayant une teneur en HPF6 de 65 %) mis dans la glace, on ajoute goutte à goutte 7,2 cm³ de pyridine. La précipitation de l'hexafluorophosphate de pyridinium est immédiate et on sépare celui-ci par filtration. On effectue ensuite trois recristallisations dans l'eau, puis une dans du méthanol absolu et enfin une dans l'éthanol absolu. On recueille ainsi 11,3 g d'hexafluorophosphate de pyridinium, ce qui correspond à un rendement global de 49 %.

On traite ensuite le produit à l'étuve à 110°C jusqu'à masse constante.

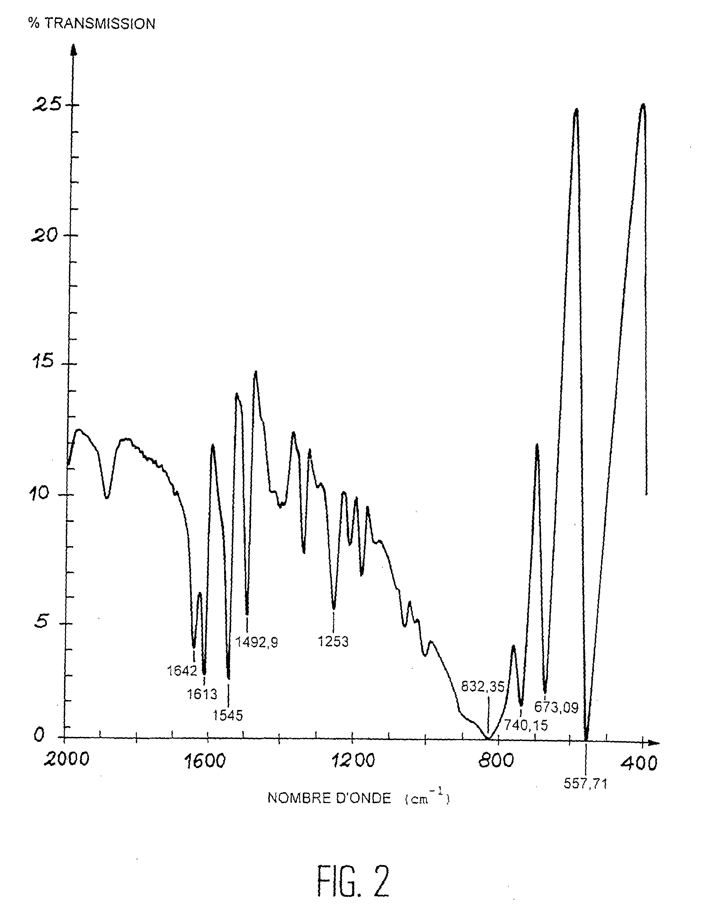

La figure 2 représente le spectre infrarouge du produit obtenu.

Sur cette figure, on observe les deux bandes caractéristiques de PF₆⁻ à 557,71 (558) et 832,35 (832) épaulée à 890 cm⁻¹. Les autres bandes sont attribuées au noyau pyridinium, y compris celle à 1642 cm⁻¹ qui peut se confondre avec celle située entre 1630 et 1645 cm⁻¹, qui se trouve dans tous les spectres IR de LiPF₆ et qui est sans doute une harmonique de la bande à 832 cm⁻¹.

Ainsi, le spectre infrarouge du produit présente des bandes identiques à celles décrites par Syed Mohamed et Coll dans J. Fluorine Chem., 23, 1983, pages 509-514 et dans Spectrochimica Acta, 41A(5), 1985, pages 725-728.

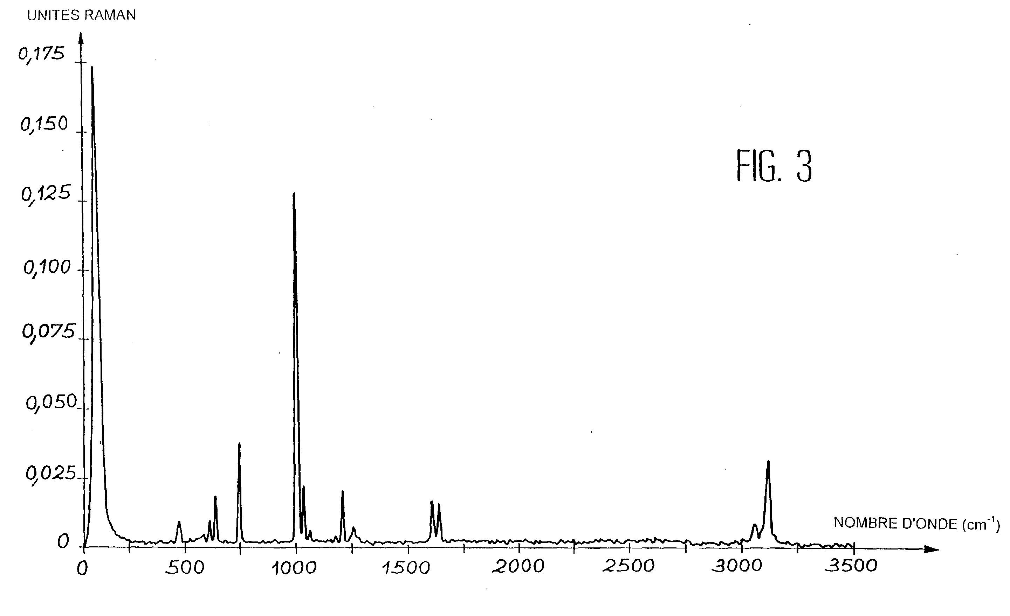

La figure 3 représente le spectre Raman du produit obtenu. On observe sur ce spectre la bande à 1008,6 cm⁻¹ qui correspond à N-H⁺.

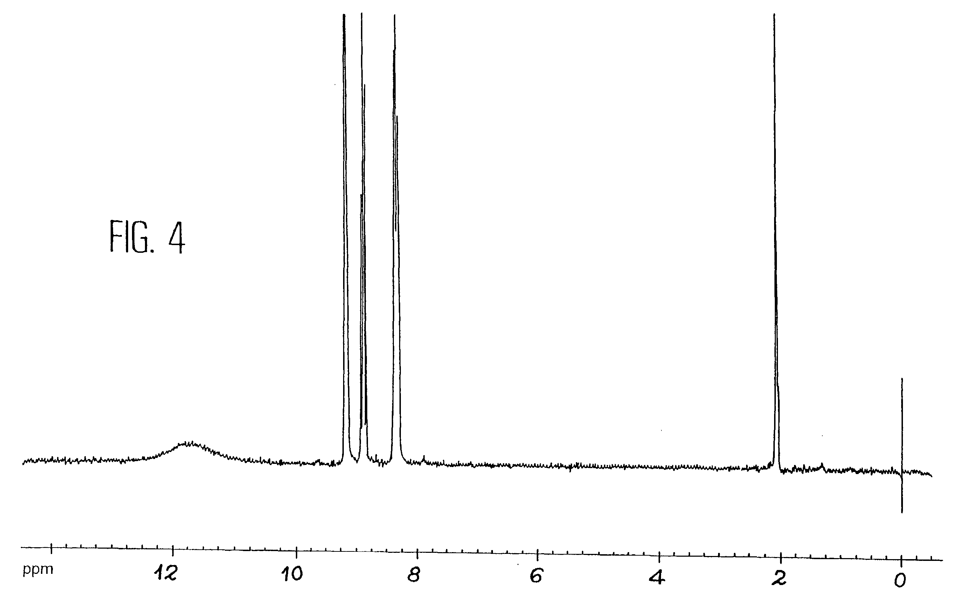

La figure 4 présente le spectre RMN du proton. Sur ce spectre le singulet élargi à 11,68 ppm (11,7 ppm) correspond à N-H⁺.

L'analyse centésimale du produit obtenu est donné dans le tableau 1 qui suit :

**Tableau 1**

| | C% | N% | F% | P% |
|---|---|---|---|---|
| Obtenu | 26,67 | 6,11 | 45,90 | 13,50 |
| Calculé | 26,68 | 6,22 | 50,64 | 13,76 |

Le contrôle de pureté effectué suivant le principe adopté par Syed Mohamed et Coll en employant la lithine à la place de la soude a montré que le sel avait un degré de pureté de 99,8 %

On peut améliorer d'au moins 20 % le rendement en C₅H₅NHPF₆ de cet exemple en effectuant uniquement une recristallisation dans l'eau et une dans le méthanol absolu, car le spectre infrarouge du produit obtenu est le même que celui obtenu après toutes les recristallisations mentionnées ci-dessus.

### Exemple 2 : Préparation du solvate LiPF₆, pyridine.

Dans cet exemple, on transforme l'hexafluorophosphate de pyridinium obtenu dans l'exemple 1, en solvate LiPF₆, pyridine, par réaction avec de la lithine en milieu éthanol absolu.

A cet effet, on ajoute 0,42 g(10⁻² mol) de lithine commerciale (LiOH, H₂O) à 2,25 g(10⁻² mol) de l'hexafluorophosphate de pyridinium C₅H₅NHPF₆ obtenu dans l'exemple 1, en suspension dans 50 cm³ d'éthanol absolu dans lequel le sel est peu soluble. La réaction est rapide et la solubilisation est totale. On ajoute alors 20 cm³ de benzène anhydre de façon à éliminer sous vide partiel l'azéotrope ternaire benzène-éthanol-eau. On obtient ainsi 2,1 g de produit solide qui est le solvate LiPF₆, pyridine, ce qui correspond à un rendement de 91 %.

Les spectres infrarouges et Raman de ce produit LiPF₆, C₅H₅N sont identiques à ceux du C₅H₅NHPF₆ obtenu dans l'exemple 1. En effet, N-H⁺ et N-Li donnent tous les deux la bande à environ 1008 cm⁻¹ en spectrométrie Raman, seules les pyridines solvatées par H20 sont vers 1026 cm⁻¹. En infrarouge la bande de NH sort vers 3300 cm⁻¹ qui appartient à un domaine du spectre inexploitable.

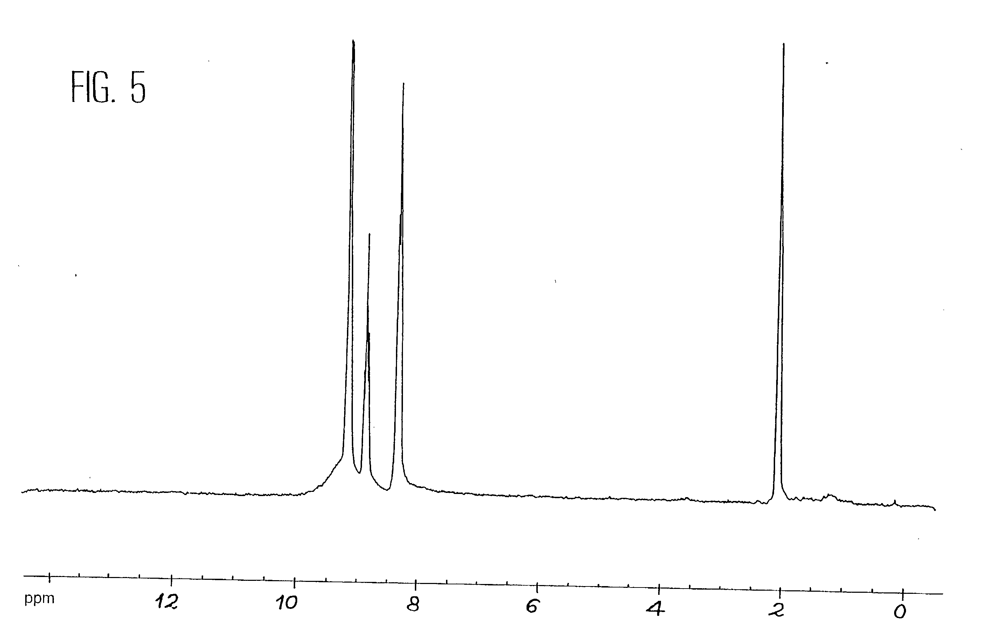

La figure 5 représente le spectre RMN du proton de ce solvate. On remarque ainsi que le singulet à 11,68 ppm est absent alors qu'il figurait sur le spectre de la figure 4 correspondant au produit C₅H₅NHPF₆, de l'exemple 2.

L'analyse centésimale du solvate est donnée dans le tableau 2 ci-dessous.

**Tableau 2 :**

| **Composition centésimale** | | | | |
|---|---|---|---|---|
| Li(C₅H₅N)PF₆ | C % | F % | P % | Li % |
| Exemple 2 | 22,61 | 49,41 | 12,70 | 3,90 |
| Exemple 3 | 22,00 | 49,37 | 12,85 | 3,50 |
| Calculé | 26,00 | 49,34 | 13,41 | 3,00 |

### Exemple 3 : Préparation du solvate LiPF₆, pyridine.

Dans cet exemple, on suit le même mode opératoire que dans l'exemple 2, mais on utilise comme milieu réactionnel du méthanol absolu. Dans ce cas, on ajoute 0,84 g de LiOH, H₂O en poudre à 4,5 g de C₅H₅NHPF₆ obtenu dans l'exemple 1 dans 100 cm³ de méthanol absolu. Comme précédemment la réaction est rapide et la solubilisation est totale. On évapore ensuite le méthanol après addition de 40 cm³ de benzène anhydre en éliminant sous vide partiel l'azéotrope ternaire benzène-méthanol-eau. On obtient ainsi 2,9 g de produit solide qui est le solvate LiPF₆, pyridine.

Les caractéristiques de ce produit sont identiques à celles du produit obtenu dans l'exemple 2. L'analyse centésimale est donnée dans le tableau 2.

Dans ce tableau 2, les valeurs trouvées pour Li, supérieures au pourcentage calculé s'expliquent par le fait que lors de l'élimination des alcools sous vide partiel, une fraction du complexe a pu être détruite selon Li(C₅H₅N)PF₆ →C₅H₅N (entrainée sous vide) + LiPF₆. La chute du pourcentage de carbone en est également une conséquence.

Ce résultat est compatible avec l'analyse du lithium par absorption atomique puisque l'on a trouvé 2,33 et 2,48 ppm, respectivement pour les exemples 2 et 3, alors que la valeur théorique serait de 1,98 ppm pour Li dans le complexe pur et 3,01 ppm pour Li dans LiPF₆.

### Exemple 4 : Préparation du solvate LiPF₆, pyridine.

Dans cet exemple, on part de l'hexafluorophosphate de pyridinium obtenu dans l'exemple 1, et on le convertit en solvate par échange avec un alcoolate de lithium constitué par du méthanolate de lithium.

On prépare tout d'abord, le méthanolate de lithium à partir d'un morceau de lithium métal disposé dans un flacon préalablement taré sous argon sec. On ajoute dans ce flacon 50 cm³ de méthanol pour 2,2.10⁻² mol de lithium. Dès que l'alcoolate est formé, on met en suspension dans le flacon la quantité stoechiométrique équivalente de l'hexafluorophosphate de pyridinium obtenu dans l'exemple 1.

La réaction est rapide. Le mélange final étant exempt d'eau, on obtient le solvate par évaporation du solvant sans addition de benzène anhydre. Après évaporation sous vide partiel à 30°C, on obtient le solvate LiPF₆, pyridine de façon quasi quantitative.

### Exemple 5 : Préparation du solvate LiPF₆, pyridine.

Dans cet exemple, on suit le même mode opératoire que dans l'exemple 4, mais on utilise comme alcoolate de lithium, l'éthanolate de lithium qui est préparé de la même façon par addition d'éthanol dans un flacon contenant un morceau de lithium. On obtient le solvate LiPF₆, pyridine également de façon quasi quantitative.

### Exemple 6 : Préparation du solvate LiPF₆, pyridine.

Dans cet exemple, on convertit le sel obtenu dans l'exemple 1 en solvate en utilisant comme composé de lithium le butyl-lithium. On met en suspension dans 5 cm³ de solution 1,6 M de butyl-lithium dans l'hexane (solution Aldrich) sous argon, 8.10⁻³ mol de C₅H₅NHPF₆ obtenu dans l'exemple 1. A température ambiante, la réaction évolue en une vingtaine d'heures et on obtient une précipitation totale du solvate. On récupère celui-ci par filtration, puis on le lave au moyen de CH₂Cl₂.

Le solvate obtenu présente les mêmes caractéristiques que celui obtenu dans les exemples précédents.

### Exemple 7 : Préparation du solvate LiPF₆, pyridine.

Dans cet exemple, on suit le même mode opératoire que dans l'exemple 6, mais on utilise comme composé de lithium du tert-butyllithium. On ajoute par petites fractions 8,5 10⁻³ mol de C₅H₅NHPF₆ obtenu dans l'exemple 1 à 5 cm³ d'une solution 1,7 M de tertbutyl lithium dans le pentane (solution Aldrich) maintenue à -20°C. La réaction est rapide et fortement exothermique, ce qui provoque l'ébullition du pentane. Le produit précipite comme dans l'exemple 6 et on le récupère par filtration, puis on le lave avec CH₂Cl₂ comme précédemment.

Les caractéristiques du produit obtenu sont identiques à celles que l'on obtient dans les exemples précédents.

### Exemple 8 : Préparation du solvate LiPF₆, pyridine.

Dans cet exemple, on convertit le sel de pyridinium obtenu dans l'exemple 1 en solvate en utilisant comme composé de lithium du méthanolate de ltihium en milieu aprotique. Dans ce cas, on fait réagir 1,26 10⁻² mol de lithium avec 20 cm³ de méthanol absolu pour former du méthanolate de lithium comme dans l'exemple 4. Après évaporation du méthanol, le résidu sec est mis en suspension dans 20 cm³ de tétrahydrofuranne (THF). On prépare par ailleurs une suspension du sel C₅H₅NHPF₆ obtenu dans l'exemple 1 en mettant en suspension 2,85 g de ce sel dans 40 cm³ de THF. On mélange alors les deux suspensions. La réaction est rapide et on obtient une solubilisation totale du solvate. On isole alors le solvate en éliminant THF par évaporation sous vide partiel à la température ambiante. Le produit obtenu présente les mêmes caractéristiques que celui obtenu dans les exemples précédents.

### Exemple 9 : Préparation de LiPF₆.

Dans cet exemple, on prépare LiPF₆ par décomposition sous vide du solvate obtenu dans l'exemple 2, en opérant sous vide dynamique à une pression inférieure à 1 Pa et à une température égale à 50°C. On obtient directement LiPF₆ pur.

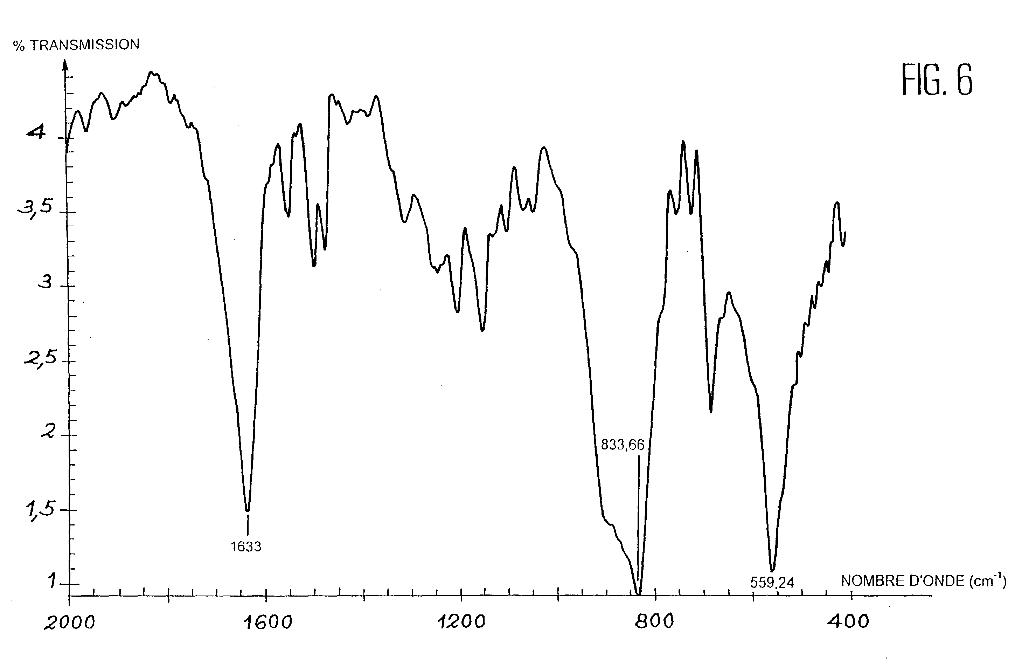

La figure 6 représente le spectre infrarouge du produit obtenu dans ces conditions. Ce spectre correspond à LiPF₆. En effet les bandes sont à : ν(P-F) = 832 cm⁻¹ épaulée à 888 cm⁻¹ et δ(P-F) à 559 cm⁻¹.

La pureté de LiPF₆ finalement régénéré, estimée par dosage de Li en absorption atomique est voisine de 99 % (98,7 et 98,9 %).

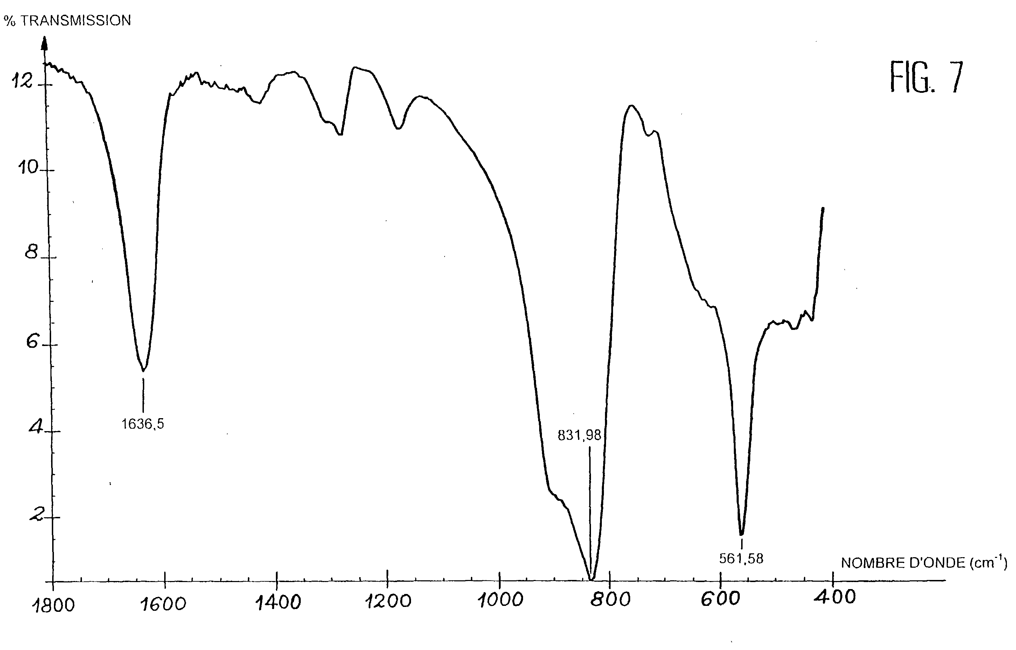

Sur la figure 7, on a représenté à titre comparatif le spectre infrarouge du produit LiPF₆ commercial de Aldrich. On remarque que ce spectre comprend les mêmes bandes à 832 (890) et 561 cm⁻¹.

### Exemple 10 : Préparation de LiPF₆, pyridine.

Dans cet exemple, on prépare LiPF₆ à partir du solvate LiPF₆, pyridine obtenu dans l'exemple 8 en séparant la pyridine par précipitation sous forme de sulfate de pyridinium. Dans ce but, on ajoute à la solution du solvate dans THF obtenu dans l'exemple 8 de l'acide sulfurique concentré (96 %), ce qui conduit à la précipitation de sulfate de pyridinium. On filtre alors la solution pour éliminer le précipité, puis on évapore sous vide le solvant organique à une température inférieure à 50°C. On obtient ainsi LiPF₆ très rapidement.

## Revendications

1. Solvate d'hexafluorophosphate de lithium et de pyridine, de formule :
Li(C₅H₅N)PF₆

2. Procédé de préparation du solvate d'hexafluorophosphate de lithium et de pyridine de formule :
Li(C₅H₅N)PF₆
**caractérisé en ce qu'**il comprend les étapes suivantes :
a) Préparation d'hexafluorophosphate de pyridinium de formule C₅H₅NHPF₆ par neutralisation de l'acide hexafluorophosphorique HPF₆ avec de la pyridine en utilisant la quantité stoechiométrique permettant de neutraliser uniquement HPF₆ et non les autres impuretés acides présentes dans l'acide de départ, et
b) Conversion de l'hexafluorophosphate de pyridinium en solvate Li(C₅H₅N)PF₆ par échange avec un composé de lithium choisi parmi la lithine, les alcoolates de lithium et les alkyl-lithium.

3. Procédé selon la revendication 2, **caractérisé en ce que** dans l'étape b), on utilise la lithine hydratée ou non, et on effectue la réaction d'échange en milieu alcool.

4. Procédé selon la revendication 3, **caractérisé en ce que** l'alcool est le méthanol ou l'éthanol.

5. Procédé selon la revendication 2, **caractérisé en ce que** dans l'étape b), on utilise un alcoolate de lithium et on effectue la réaction d'échange dans l'alcool correspondant à l'alcoolate de lithium ou dans un milieu aprotique.

6. Procédé selon la revendication 5, **caractérisé en ce que** l'alcoolate de lithium est le méthanolate ou l'éthanolate de lithium.

7. Procédé selon la revendication 5 ou 6, **caractérisé en ce que** le milieu aprotique est le tétrahydrofuranne.

8. Procédé selon la revendication 2, **caractérisé en ce que** dans l'étape b), on utilise un alkylithium et on effectue la réaction d'échange dans un hydrocarbure aliphatique saturé.

9. Procédé selon la revendication 8, **caractérisé en ce que** l'alkyl lithium est le butyl lithium ou le tert-butyllithium.

10. Procédé de préparation d'hexafluorophosphate de lithium LiPF₆, **caractérisé en ce qu'**il consiste à soumettre le solvate d'hexafluorophosphate de lithium et de pyridine de formule :
Li(C₅H₅N)PF₆
à une décomposition sous vide à une température inférieure ou égale à 50°C, pour éliminer la pyridine par volatilisation.

11. Procédé de préparation d'hexafluorophosphate de lithium LiPF₆, **caractérisé en ce que** l'on fait réagir le solvate d'hexafluorure de lithium et de pyridine, de formule Li(C₅H₅N)PF₆ avec de l'acide sulfurique pour éliminer la pyridine par précipitation sous forme de sulfate de pyridinium.

12. Procédé selon l'une quelconque des revendications 10 et 11 **caractérisé en ce que** le solvate est préparé par mise en oeuvre du procédé selon l'une quelconque des revendications 2 à 9.

## Patentansprüche

1. Lithiumhexafluorophosphat-Pyridin-Solvat der Formel:
Li(C₅H₅N)PF₆

2. Verfahren zur Herstellung des Lithiumhexafluorophosphat-Pyridin-Solvats der Formel:
Li(C₅H₅N)PF₆
**dadurch gekennzeichnet, dass** es die folgenden Schritte umfasst:
a) Herstellung von Pyridiniumhexafluorophosphat der Formel C₅H₅NHPF₆ durch Neutralisation der Hexafluorophosphorsäure HPF₆ mit Pyridin, wobei man die stöchiometrische Menge verwendet, die es erlaubt, allein HPF₆ zu neutralisieren und nicht die anderen sauren Verunreinigungen, die in der Säure, von der ausgegangen wird, vorhanden sind, und
b) Umwandlung des Pyridiniumhexafluorophosphats in Solvat Li(C₅H₅N)PF₆ durch Austausch mit einer Lithiumverbindung, gewählt unter Lithiumhydroxid, den Lithiumalkoholaten und den Alkyllithium-Verbindungen.

3. Verfahren nach Anspruch 2, **dadurch gekennzeichnet, dass** man in Schritt b) hydratisiertes oder nicht hydratisiertes Lithiumhydroxid verwendet und dass man die Austauschreaktion im alkoholischen Medium ausführt.

4. Verfahren nach Anspruch 3, **dadurch gekennzeichnet, dass** der Alkohol Methanol oder Ethanol ist.

5. Verfahren nach Anspruch 2, **dadurch gekennzeichnet, dass** man in Schritt b) ein Lithiumalkoholat verwendet und dass man die Austauschreaktion in dem dem Lithiumalkoholat entsprechenden Alkohol oder in einem aprotischen Medium ausführt.

6. Verfahren nach Anspruch 5, **dadurch gekennzeichnet, dass** das Lithiumalkoholat Lithiummethanolat oder Lithiumethanolat ist.

7. Verfahren nach Anspruch 5 oder 6, **dadurch gekennzeichnet, dass** das aprotische Medium Tetrahydrofuran ist.

8. Verfahren nach Anspruch 2, **dadurch gekennzeichnet, dass** man in Schritt b) eine Alkyllithium-Verbindung verwendet und dass man die Austauschreaktion in einem gesättigten aliphatischen Kohlenwasserstoff ausführt.

9. Verfahren nach Anspruch 8, **dadurch gekennzeichnet, dass** die Alkyllithium-Verbindung Butyllithium oder tert-Butyllithium ist.

10. Verfahren zur Herstellung von Lithiumhexafluorophosphat LiPF₆, **dadurch gekennzeichnet, dass** es darin besteht, das Lithiumhexafluorophosphat-Pyridin-Solvat der Formel:
Li(C₅H₅N)PF₆
einer Zersetzung unter Vakuum bei einer Temperatur niedriger als oder gleich 50°C zu unterziehen um das Pyridin durch Verflüchtigung zu entfernen.

11. Verfahren zur Herstellung von Lithiumhexafluorophosphat LiPF₆, **dadurch gekennzeichnet, dass** man das Lithiumhexafluorophosphat-Pyridin-Solvat der Formel Li(C₅H₅N)PF₆ mit Schwefelsäure reagieren lässt um das Pyridin durch Ausfällung in Form von Pyridiniumsulfat zu entfernen.

12. Verfahren nach einem der Ansprüche 10 und 11, **dadurch gekennzeichnet, dass** das Solvat durch Ausführung des Verfahrens nach einem der Ansprüche 2 bis 9 hergestellt wird.

## Claims

1. Solvate of lithium hexafluorophosphate and pyridine of formula:
Li(C₅H₅N)PF₆

2. Process for the preparation of the solvate of lithium hexafluorophosphate and pyridine of formula:
Li(C₅H₅N)PF₆
**characterized in that** it comprises the following stages:
a) preparation of pyridinium hexafluorophosphate of formula C₅H₅NHPF₆ by neutralization of hexafluorophosphoric acid HPF₆ with pyridine using the stoichiometric quantity permitting the neutralization of only the HPF₆ and not the other acid impurities present in the starting acid and
b) conversion of the pyridinium hexafluorophosphate into solvate Li(C₅H₅N)PF₆ by exchange with a lithium compound chosen from among lithium hydroxide, lithium alkoxides and alkyl-lithiums.

3. Process according to claim 2, **characterized in that** in stage b) use is made of hydrated or unhydrated lithium hydroxide and the exchange reaction is performed in an alcoholic medium.

4. Process according to claim 3, **characterized in that** the alcohol is methanol or ethanol.

5. Process according to claim 2, **characterized in that** in stage b) use is made of a lithium alkoxide and the exchange reaction is performed in the alcohol corresponding to lithium alkoxide or in an aprotic medium.

6. Process according to claim 5, **characterized in that** the lithium alkoxide is lithium methanolate or ethanolate.

7. Process according to claim 5 or 6, **characterized in that** the aprotic medium is tetrahydrofuran.

8. Process according to claim 2, **characterized in that** in stage b) use is made of an alkyl-lithium and the exchange reaction is performed in a saturated aliphatic hydrocarbon.

9. Process according to claim 8, **characterized in that** the alkyl-lithium is butyl lithium or tert. butyl lithium.

10. Process for the preparation of lithium hexafluorophosphate LiPF₆, **characterized in that** it consists of subjecting the solvate of lithium hexafluorophosphate and pyridine of formula:
Li(C₅H₅N)PF₆
to a vacuum decomposition at a temperature equal to or below 50°C in order to eliminate the pyridine by volatilization.

11. Process for the preparation of lithium hexafluorophosphate LiPF₆, **characterized in that** the solvate of lithium hexafluoride and pyridine of formula Li(C₅H₅N)PF₆ is reacted with sulphuric acid to eliminate the pyridine by precipitation in the form of pyridinium sulphate.

12. Process according to either of the claims 10 and 11, **characterized in that** the solvate is prepared by performing the process according to any one of the claims 2 to 9.
